# EUROPEAN PATENT APPLICATION

(11) **EP 0 662 777 A2**
(43) Date of publication of application: **12.07.1995**
(21) Application number: 94110686.6
(22) Date of filing: 08.07.1994
(51) Int. Cl.: H04Q 11/00, H04Q 11/04

(54) **Subscriber line transmission device**

(30) Priority: 11.01.1994 JP 1114/94
(71) Applicant: FUJITSU LIMITED, Kawasaki-shi, Kanagawa 211 (JP)
(72) Inventor: Ishikawa, Nobuyuki, c/o Fujitsu Limited, Kawasaki-shi, Kanagawa 211 (JP)
(74) Representative: Lehn, Werner, Dipl.-Ing.

(57) **Abstract**

An arbitrary number of subscriber service channel sections (2) are inserted into arbitrary common slot positions, and signaling processing sections (3) are also inserted into an arbitrary number of arbitrary slots. The subscriber service channel sections (2) are connected to a concentration section (6) and a time slot interchange section (4), and the signaling processing sections (3) are connected to the time slot interchange section (4). By assigning time slots at the time slot interchange section, transfer of the signaling information it done between the specified subscriber service channel section and the specified signaling processing section. Even in the case in which a concentration function processing section (5) is inserted into a common slot, time slot assignment by the time slot interchange section is used to make connection to the signaling processing section.

## Description

### BACKGROUND OF THE INVENTION

### 1. Field of the Invention

The present invention is related to a subscriber transmission device which is connected via a multiplexed transmission path to an exchange and which contains a number of subscribers.

Network systems in which a subscriber line transmission device serving a number of subscriber lines relatively distant from the exchange, this subscriber line transmission device connected to the exchange by means of a multiplexed transmission path, so that services such as telephone service, data transmission service, and wideband transmission services such as image transmission are provided to distant subscribers are known. It is desirable that this kind of subscriber line transmission device be capable of flexibly handling increases and decrease in the number of subscribers, and demands from subscribers for various services.

### 2. Description of the Related Art

Exchanges are connected to remote subscriber line transmission devices via multiplexed transmission paths. Subscriber line transmission devices have a concentration function, and house a number of subscriber terminals and PBXs.

In these subscriber line transmission devices, because it is necessary to change the configuration of the equipment in accordance with increases or decreases in number of subscribers and in accordance with changes in services, in general each of the parts of the equipment is configured into packages, for example, subscriber service channel sections and signaling processing sections, each of these packages being inserted into and connected to a connector in a specified position. Connections between these connectors are made by wiring on the backplane.

For example, between the above-noted signaling processing sections and the above-noted service channel sections, signaling information such as outgoing calls, incoming calls, and dialing is transferred. When the number of subscriber service channel sections increases to support more subscribers or the services provided changes, thereby requiring an increase in signaling processing capability, the number of signaling processing sections must be increased accordingly. In such cases, the backplane between each slot has been done beforehand by means of panel positioning, so that the signaling processing section insertion slots and package insertion slots for the packages which have the concentration function that converts the signaling information from the above-described signaling processing sections to message information between exchanges are predetermined.

However, in the above-described configuration, because the slots for the subscriber service channel sections connected to a given signaling processing section are predetermined, in the case in which the number of subscriber service channel sections connected to this signaling processing section increases, even if there is an open slot connected to another signaling processing section, it is impossible to add any more subscriber service channel sections. In addition, in the case in which the number of signaling processing sections is to be increased as well, when there are no more open slots assigned to signaling processing sections, it is impossible to further increase the number of signaling processing sections.

Therefore, in a subscriber line transmission device having the above-described configuration, it is difficult to accommodate an increase or decrease in the number of subscribers and changes in the type of services, this leading to the problem of not being able to sufficiently accommodate the diversification of and increased speed of communications means accompanying recent developments such as ISDN, B-ISDN, ATM, and CATV.

### SUMMARY OF THE INVENTION

The object of the present invention is to be able to flexibly accommodate increases and decreases in number of subscribers and changes in the type of services.

According to the present invention a subscriber line transmission device is provided in which an arbitrary number of subscriber service channel section and an arbitrary number of signaling processing sections are inserted into a number of common slots, with signaling information between a specified subscriber service channel section and a specified signaling processing section being transferred in accordance with a specified time slot.

In addition, a time slot interchange section is provided which controls assignment of the time slots of the transfer of signaling information between the above-noted subscriber service channel sections and the above-noted signaling processing sections, based on identification information between the subscriber service channel sections and signaling processing sections inserted into the above-noted number of slots.

Further, in addition to the above-noted subscriber service channel sections and above-noted signaling processing sections inserted into the above-noted common slots, a concentration function processing section is inserted into the common slots, the time slot of the control channel information between this concentration function processing section and the signaling processing section being controlled by the above-noted time slot interchange section.

According to the present invention, a subscriber line transmission device is provided, wherein the interconnections between the above-noted common slots are made via an optical divider selection circuit, which includes optical transmitters and receivers, and an optical transmission path, signaling information between the above-noted subscriber service channel sections and above-noted signaling processing sections, which are inserted into the above-noted common slots being transferred by optical communications, and a time slot control section controlling the time slots of the transmission and reception of this signaling information. Further, it is also possible to mutually connect the above-noted common slots via an optical divider selection circuit and an optical transmission path, providing the above-noted optical transmitters and receivers at the above-noted subscriber service channel sections and above-noted signaling processing sections.

### BRIEF DESCRIPTION OF THE DRAWINGS

FIG. 1 is a system block diagram showing one example of a related network configuration.

FIG. 2 is block diagram showing an example of one configuration of a related subscriber line transmission device.

FIG. 3 is a conceptual drawing explaining the subscriber line transmission device according to the present invention.

FIG. 4 is a block diagram showing the 1st embodiment of the subscriber line transmission device according to the present invention.

FIG. 5 is an operational diagram explaining the operation of the time slot interchange section of FIG. 4.

FIG. 6 is a block diagram showing the 2nd embodiment of the subscriber line transmission device according to the present invention.

FIG. 7 is a timing diagram showing one example of the operational timing of the signaling optical bus of FIG. 6.

FIG. 8 is a timing diagram showing one example of the operational timing of the data optical bus of FIG. 6.

### DESCRIPTION OF THE PREFERRED EMBODIMENTS

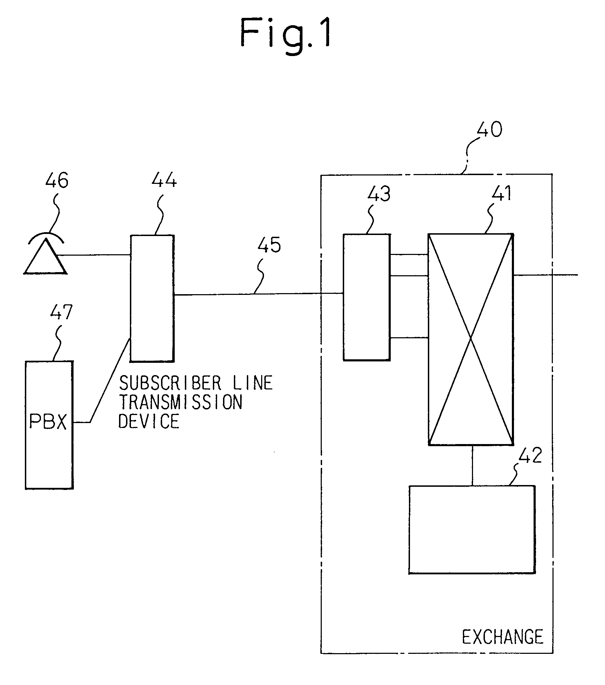

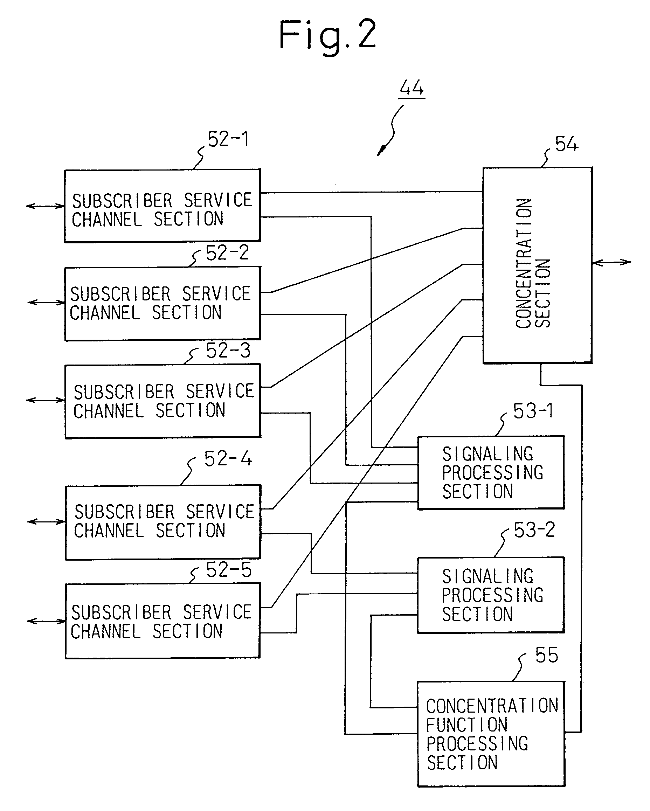

Before describing the preferred embodiments of the present invention, examples of the related art are provided, with reference being made to the accompanying drawings FIG. 1 and FIG. 2.

FIG. 1 shows one example of the configuration of a related network, showing the configuration in the case in which the exchange 40 includes a switching network 41, a control section 42, and an exchange-side transmission device 43. The interconnections between the exchange-side transmission device 43 and the subscriber line transmission device 44 which is the object of the present invention are made by means of the multiplexed transmission path 45, with the subscriber line transmission device 44 housing a number of subscribers and PBXs 47. Because the above-noted subscriber line transmission device 44 must have a configuration that changes in accordance with an increase or decrease in the number of subscribers and the type of services, in general each section of this is configured as a package.

FIG. 2 is a block diagram showing one example of the above-noted subscriber line transmission device 44.

In this drawing, 52-1 to 52-5 are subscriber service channel sections, 53-1 and 53-2 are signaling processing sections, 54 is a concentration section, and 55 is a concentration function processing section. Each of the subscriber service channel sections 52-1 to 52-5, the signaling processing sections 53-1 and 53-2, and the concentration function processing section 55 are implemented as packages, inserted into the specified slots, with interconnections therebetween being made by means of backplane wiring.

The subscriber service channel sections 52-1 to 52-5 are connected between the subscribers and subscriber lines (not shown in the drawing), and perform such functions as receipt of calls from subscribers, and calling of subscribers with respect to incoming calls. The concentration section 54 is connected to the exchange by a 2M or 1.544 Mbs, for example, multiplexed transmission path (not shown in the drawing), various data such as voice data and image data from the subscriber service channel sections 52-1 to 52-5 being multiplexed and sent to the exchange 40, and further multiplexed data from the exchange 40 being demultiplexed and distributed to the subscriber service channel sections 52-1 to 52-5.

Between the signaling processing sections 53-1 and 53-2 and the subscriber service channel section 52-1 to 52-5, transmission and reception of signaling such as outgoing calls, incoming calls, and dialing is performed. The signaling processing sections 53-1 and 53-2 sent messages to the concentration function processing section 55 which correspond to the signaling information from the subscriber service channel sections 52-1 to 52-5, and the concentration function processing section 55 transmits information such as the control channel with the concentration section 6, thereby controlling multiplexing and demultiplexing at the concentration section 6.

The signaling processing sections 52-1 and 53-2 are increased in number to accommodate either an increase in the number of subscriber service channel sections to cope with subscribers or an increase in processing capability to cope with changed services. As described above, the interconnections between slots are made beforehand by means of, for example, a backplane, so that the insertion slots for the subscriber service channel sections to be connected to the signaling processing section 53-1 and the insertion slot to receive the concentration function processing section 55 are predetermined.

In this manner, since each package is inserted in a prespecified slot, if the number of subscriber service channel sections to be connected to the signaling processing section increases and there are no more open slots for these packages, even if there are open slots for another signaling processing section, it is not possible to increase the number of subscriber service channel sections. Also, in the case of increasing the number of signaling processing sections as well, a further increase is not possible if there are no more open slots for that package.

The present invention enables flexible accommodation for an increase or decrease in the number of subscribers and a change in the service type, and is described in detail below.

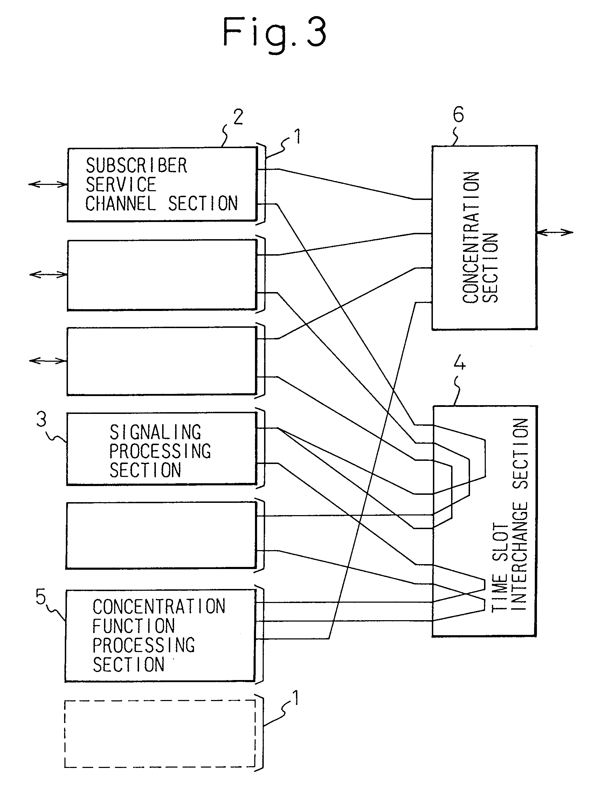

FIG. 3 is an example of a configuration of a subscriber line transmission device according to the present invention.

In FIG. 3, an arbitrary number of subscriber service channel sections 2 and an arbitrary number of signaling processing sections 3 are inserted into a plurality of common slots, with signaling information between a specified subscriber service channel section 2 and a specified signaling processing section 3 being transferred in accordance with a specified time slot. Further, concentration section 6 is connected to the exchange by means of a, for example, 2M or 1.544 Mbs multiplexed transmission path, various data such as voice data and image data from subscriber service channel sections 52-1 to 52-5 being multiplexed and sent to the exchange 40, and multiplexed data from the exchange 40 being demultiplexed and distributed to the subscriber service channel sections 52-1 to 52-5.

The time slot interchange section 4 distinguishes between the various packages inserted into the common slots, such as the subscriber service channel sections 2 and the signaling processing sections 3 based on the identification information of these packages, and then accordingly controls the assignment of time slots for the signaling information to be transferred between these subscriber service channel sections 2 and signaling processing sections 3.

Information including control channel information is transferred with the concentration section 6, the concentration function processing section 5 which controls the multiplexing and demultiplexing at the concentration section 6 being inserted into one of the common slots 1 along with the subscriber service channel sections 2 and signaling processing sections 3. The above-noted time slot interchange section 4 performs control of the switching of the time slot of the control channel information between the above-noted concentration function processing section 5 and the signaling processing sections 3.

In this configuration, it is possible to mutually connect the above-noted plurality of common slots 1 by an optical divider selection circuit which includes optical transmitters and receivers, and an optical transmission path, with signaling information between the subscriber service channel sections 2 and the signaling processing sections 3 inserted into the above-noted common slots 1 being performed by means of optical signals. The above-noted optical transmitter and optical receiver can also be provided in the subscriber service channel sections 2 and signaling processing sections 3 which are inserted into the plurality of common slots 1.

Signaling information between the subscriber service channel sections 2 and the signaling processing sections 3 is transmitted during the assigned time slot. Therefore, when arbitrary subscriber service channel sections 2 or signaling processing sections 3 are inserted into arbitrary slot positions of the common slots 1, the system determines the inserted slot positions and types of packages given from the packages at, for example, the time of system startup, time slots being assigned according, enabling signaling information to be sent and received between a specified subscriber service channel section 2 and a specified signaling processing section 3.

The above-noted time slot interchange section 4 is configured from, for example, time switches using memory, with identification being performed of subscriber service channel sections 2 and signaling processing sections 3 inserted into common slot 1 positions based on the above-noted identification information, and the time slot during which the connection is to be made between a subscriber service channel section 2 and a signaling processing section 3 being assigned. As shown in FIG. 3, it is possible to selectively connect subscriber service channel sections 2 with respect to two different types of signaling processing sections 3.

The concentration function processing section 5, which transfers control channel and other information with the concentration section 6 and controls the multiplexing and demultiplexing at the concentration section 6 is also implemented as a package and inserted into a common slot 1. A connection is made and control channel information is transferred between the above-noted concentration function processing section 5 and the signaling processing sections 3 is made in accordance with a time slot assigned by the time slot interchange section 4,

The above-described optical divider selection circuit includes an optical transmitter and an optical receiver, and converts electrical signals to optical signals by means of its optical transmitter, these optical signals being divided and sent to the optical transmission path, with optical signals received via the optical transmission path being selected and applied to the optical receiver, whereat they are converted to electrical signals. Common slots 1 are mutually interconnected via the above-noted optical divider selection circuit and optical transmission path, with the transfer of signaling information between subscriber service channel sections 2 and signaling processing sections 3 inserted into the common slots 1 being performed by the time slot interchange section. The above-noted optical transmitter and optical receiver are provided at the subscriber service channel sections 2 and the signaling processing sections 3, respectively.

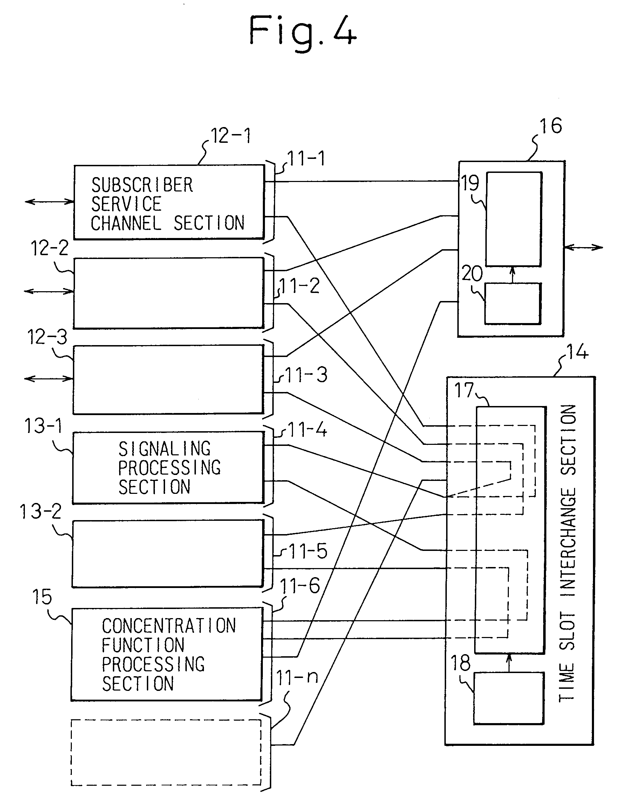

FIG. 4 is a block diagram that shows the 1st embodiment of the subscriber line transmission device according to the present invention.

In FIG. 4, 11-1 to 11-n are common slots, 12-1 to 12-3 are subscriber service channel sections, 13-1 and 13-2 are signaling processing sections, 14 is a time slot interchange section, 15 is a concentration function processing section, 16 is a concentration section, 17 is a time switch, 18 is a control section, 19 is a multiplexer, and 2 is a control section. The concentration section 16 is connected by means of a multiplexed transmission path to the exchange (not shown in the drawing), and the subscriber service channel sections 12-1 to 12-3 are connected via subscriber lines to the subscribers (not shown in the drawing). Common slot 11 is indicated as empty by the broken line.

Common slots 11-1 to 11-n are connected between the time slot interchange section 14 and the concentration section 16. These common slots 11-1 to 11-n can accept any of the packaged subscriber service channel sections or signaling processing sections in any slot, with slot assignments not made beforehand. That is, any package can be inserted into any slot, so that as long as there are open slots, it is possible to increase the number of either subscriber service channel sections or signaling processing sections. In this case, the identification information which indicates the type of each package is distinguished by either the time slot interchange section 14 or concentration section 16 or at the exchange via the concentration section 16. As a means of reading this identification information, it is possible to use mechanical contacts at, for example, connecting pins of known connectors, or to use electrical means such as a ROM.

Based on this identification information, it is possible to determine the subscriber service channel section to be connected to the signaling processing section, this connection information being sensed by either the control section 18 of the time slot interchange section 14 or by the control section 20 of the concentration section 16, or via the multiplexed transmission by the exchange, with the control section 18 of the time slot interchange section 14 assigning time slots based on this connection information. According to FIG. 4, the time slot of time switch 14 is controlled so that subscriber service channel sections 12-1 and 12-3 are connected to signaling processing section 13-1, and also so that subscriber service channel section 12-2 is connected to signaling processing section 13-2.

A time slot is also assigned for mutual connections between signaling processing sections 13-1 and 13-2 and the concentration function processing section 15, with control channel information being transferred via the time switch 17 of the time slot interchange section 14. The subscriber service channel sections 12-1 to 12-3 are each connected to the concentration section 16 via an data bus assigned to the arbitrary slots, and in the same manner the concentration function processing section 15 is also connected to the concentration section 16 by means of wiring which performs transfer of control channel information given to each arbitrary common slot.

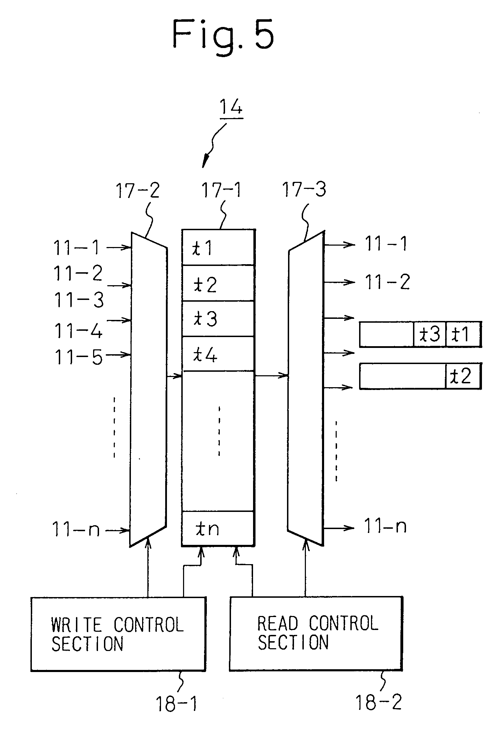

FIG. 5 is a drawing which explains the operation of the above-noted time slot interchange section 14.

In FIG. 5, 17-1 is a memory, 17-2 is a multiplexer, 17-3 is a demultiplexer, 18-1 is a write control section, and 18-2 is a read control section. Common slots 11-1 to 1-n are connected to the multiplexer 17-2, with the packages such as the subscriber service channel sections inserted into the common slots 11-1 to 11-n being sequentially selected by means of the write control section 18-1 an input into memory 17-1, so that, for example, the writing is done in the sequence t1, t2, ... , tn by means of sequential write control. The above-noted sequentially written information is read out at the required time slots by the read control section 18-2, and transferred via the demultiplexer 17-3 to the subscriber service channel sections and other packages inserted into the common slots 11-1 to 11-n.

For example, if a connection is to be made using times slots t1 and t4 between subscriber service channel section 12-1 inserted into common slot 11-1 as in FIG. 4 and the signaling processing section 13-1 inserted into common slot 11-4 as shown in FIG. 4, the signaling information from the subscriber service channel section 12-1 is written, under control of the write control section 18-1, into the area of memory 17-1 which corresponds to the time slot t1. This is read out at time slot t4 by means of control from the read control section 18-2, and transferred to the signaling processing section 13-1.

On the other hand, to use same time slots t1 and t4 to transfer the signaling information from signaling processing section 13-1 to the subscriber service channel section 12-1, that signaling information is written into the area of memory 17-1 corresponding to time slot t4 under control of the write control section 18-1, and under control of the read control section 18-2, this is read out at time slot t1 and transferred to the subscriber service channel section 12-1. It is also possible to assign different time slots for the sending and receiving of signaling information.

In the same manner, to connect the subscriber service channel section 12-2 inserted into the common slot 11-2 in FIG. 4 and the signaling processing section 13-2 inserted into the common slot 11-5 in FIG. 4 during the time slots t2 and t5, the signaling information from the subscriber service channel section 12-2 is written into the area of memory 17-1 corresponding to time slot t2 under control of the write control section 18-1, and from this area the information is transferred under control of the read control section 18-2 at time slot t5 to the signaling processing section 13-2. To use the same time slots in the opposite direction, the signaling information from the signaling processing section 13-2 is written into the area of memory 17-1 corresponding to time slot t5, and read out and transferred to subscriber service channel section 12-2 at time slot t2.

To connect use time slots t3 and t6 to connect the subscriber service channel section 12-3 inserted in common slot 11-3 with the signaling processing section 13-2 inserted into common slot 11-4, the signaling information from the subscriber service processing section 12-3 is written into the area of memory 17-1 corresponding to time slot t3 under control of the write control section 18-1, and then read out and transferred from that area at time slot t6 to the signaling processing section 13-1 under control of the write control section 18-2.

In the same manner, between the signaling processing sections 13-1 and 13-2 and the concentration function processing section 15 of FIG. 4 as well, time slots are assigned to each of them and time slots are exchanged via memory 17-1, so that the transfer of control channel information is performed. It is also possible to insert a larger number of signaling processing sections into the common slots.

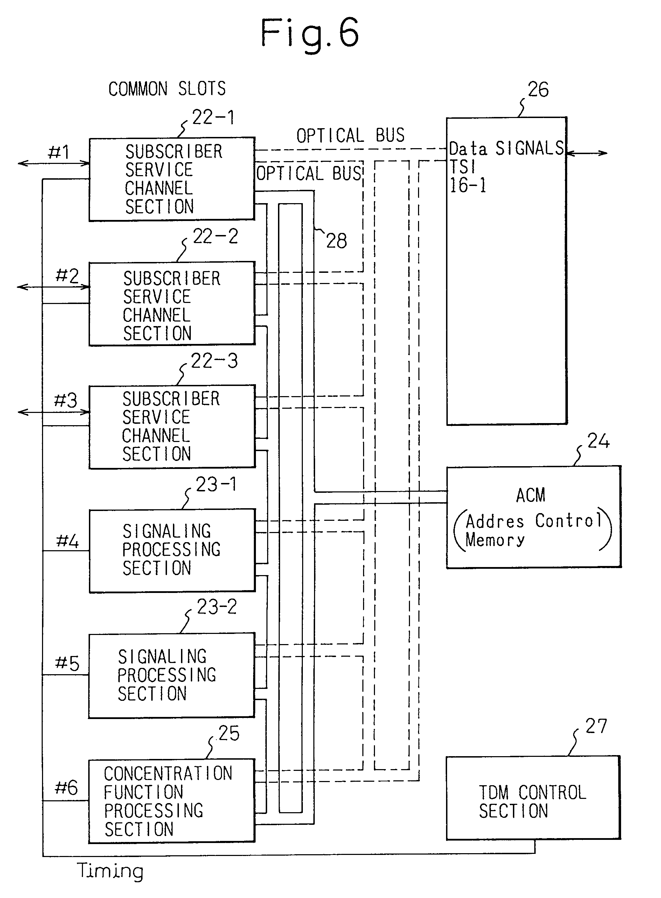

FIG. 6 is a block diagram which shows the 2nd embodiment of the subscriber line transmission device according to the present invention.

In FIG. 6, 22-1 to 22-3 are subscriber service channel sections, 23-1 and 23-2 are signaling processing sections, 24 is a time-slot control section (ACM), 25 is a concentration function processing section, 26 is a concentration section (DTS1), and 27 is a time-division multiplexing controller (TIME-DIVISION MULTIPLEXING CONTROLLER). The subscriber service channel section 22-1 to 22-3, the signaling processing sections 23-1 and 23-2, and the concentration function processing section 25, in the same manner as in the previously described embodiment, are inserted into arbitrary common slots. The subscriber service channel sections 22-1 to 22-3 are connected to the concentration section 26, the concentration section 26 being connected to the exchange via a multiplexed transmission path (not shown in the drawing).

In FIG. 6, mutual connections are made between each of the common slots and the time-slot control section 24 via an optical loop type signaling optical bus 28. In this case, the subscriber service channel section 22-1 to 22-3, signaling processing sections 23-1 and 23-2, and the concentration function processing section 25 inserted into the common slots are provided with optical transmitters and optical receivers for the purpose of sending and receiving optical signals. The time-slot control section 24 of this embodiment assigns time slots based on information from the positions of the common slots and the package identification information of the packages inserted therein. The time-division multiplexing controller 27 generates timing signals such as an 8-kHz reference clock signal, and givens a reference time position to each of the packages inserted into the common slots.

For example, the signaling information from the subscriber service channel section 22-1 to the signaling processing section 23-1 is converted by the associated optical transmitter to an optical signal and transmitted over the optical transmission path via the optical divider selection circuit at the time slot assigned by the above-described time-slot control section 24. At a time slot assigned by the above-noted time-slot control section 24, the signaling processing section 23-1 receives this optical signal from the optical transmission path via the optical divider selection circuit, and applies it to the associated optical receiver, at which it is converted into an electrical signal by its optical receiver. On the other hand, In the reverse direction, signaling information from the above-noted signaling processing section 23-1 to the above-noted subscriber service channel section 22-1 is, at a time slot assigned by the above-noted time-slot control section 24, converted to an optical signal and transmitted, whereupon it is converted to an electrical signal upon receipt at the subscriber service channel section 22-1.

In the same manner, with regard to the signaling processing sections 23-1 and 23-2 and the concentration function processing section 25, at time slots assigned by the time-slot control section 24, control channel information is converted to optical signals and transferred.

It is also possible to provide the above-noted optical transmitters and optical receivers within the optical divider selection circuit. It is further possible to provide an optical switch function at the optical divider selection circuit, so that this optical switch function is controlled at the assigned time slot, the optical signal being selectively received to enable transfer of the optical signal to the desired package.

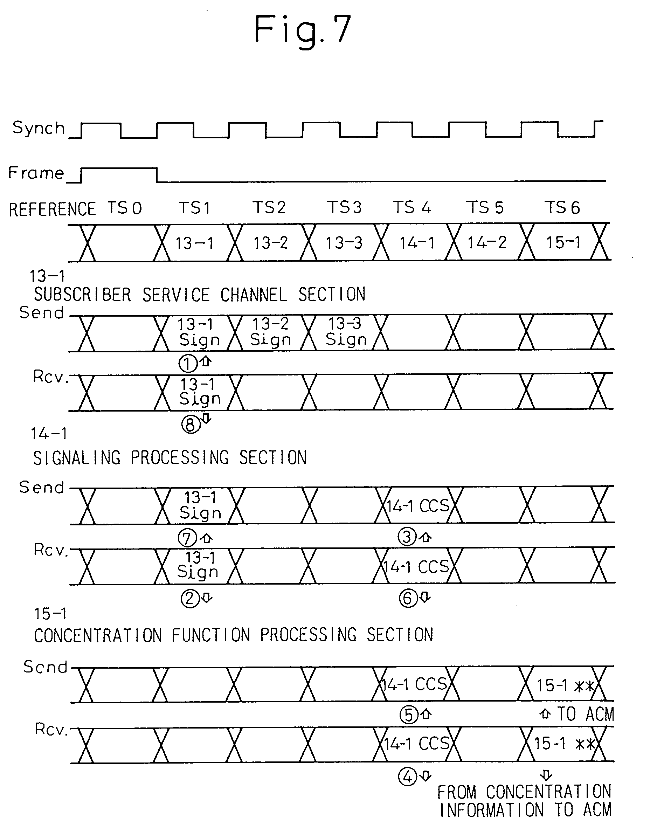

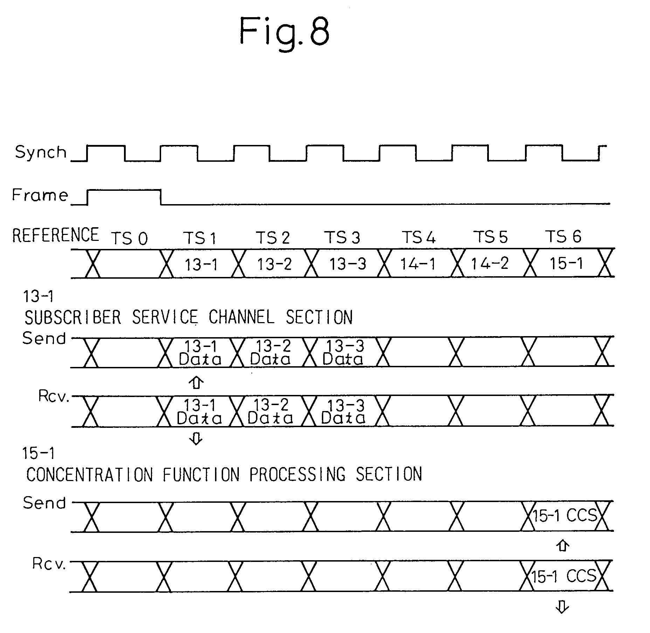

FIG. 7 is a timing diagram showing the timing at the signaling optical bus of FIG. 6. FIG. 8 is a timing diagram showing the timing at the data optical bus of FIG. 6.

In FIG. 7, a time slot (TS1) is assigned by the time-slot control section 24 to the communication between the subscriber service channel section 13-1 and the signaling processing section 14-1, the off-hook or other signaling information (13-1 Sign) detected at [1] subscriber service channel section 13-1 being sent via the transmission time slot TS1, and at [2] this signal is received at time slot TS1 at the receiving side of the signaling processing section 14-1. [3] signaling processing section 14-1 performs a protocol conversion of the above-noted received bit information to the channel control signal (CCS), the time-slot control section 24 sending this to the concentration function processing section 15-1 via the time slot (TS4) assigned by the time-slot control section 24 for communications between the signaling processing section 14-1 and the concentration function processing section 15-1. [4] concentration function processing section 15-1 performs the required concentration with respect to the above-noted channel control signal, and sends this to the concentration section 26 at the time slot (TS6) for the data optical bus shown in FIG. 8. This signal is sent from the concentration section 26 to the exchange via the multiplexed transmission path. In the other direction, signaling information received from the exchange as well is ultimately applied to the subscriber service channel section 13-1 ([5] to 8] in FIG. 7) via each of the above time slots (TS1, TS4, and TS6) specified by the time-slot control section 24.

In FIG. 7, time slot 6 (TS6) is assigned as a fixed time slot for communications between the time-slot control section 24 and each of the packages. For the voice or image data of each of the subscriber service channel section on the data optical bus side shown in FIG. 8, in general a time slot for an interface such as a 2M interface is assigned.

As described above, the present invention has the advantage of enabling packaged subscriber service channel sections 2 and signaling processing sections 3 to be inserted at arbitrary common slots, thereby enabling easy accommodation of an increase or decrease in the number of subscribers. Because it is possible, by means of time slot interchange section 4, to assign time slots to between and insertion positions of the common slots 1, it is possible, as required during operation, to, for example, easily change the connections between the subscriber service channel sections 2 and the signaling processing sections 3. Further, by employing optical communications between the common slots 1, it is easy to transfer wideband signals, thereby providing the advantage of economical implementation of a large-scale subscriber line transmission system.

## Claims

1. A subscriber line transmission device wherein an arbitrary number of subscriber service channel sections and an arbitrary number of signaling processing sections are inserted into a plurality of common slots, and wherein signaling information is transferred between a specified subscriber service channel section and a specified signaling processing section according to a specified time slot.

2. A subscriber line transmission device according to claim 1, comprising a time slot interchange section which performs assignment of time slots for the transfer of signaling information between said subscriber service channel sections and said signaling processing sections, based on identification information of the subscriber service channel section and signaling processing section inserted into said plurality of common slots.

3. A subscriber line transmission device according to claim 1, wherein along with said subscriber service channel sections and said signaling processing sections, a concentration function processing section is also inserted into said common slots, and wherein the time slots for control channel information between said concentration function processing section and said signaling processing sections are controlled by means of said time slot interchange section.

4. A subscriber line transmission device according to claim 1, comprising a time-slot control section which performs control of the optical communications send and receive time slots for signaling information between said subscriber service channel sections and said signaling processing sections inserted into said plurality of common slots and which are connected mutually between said plurality of common slots via a optical divider selection circuit, which includes an optical transmitter and an optical receiver, and an optical transmission path.

5. A subscriber line transmission device according to claim 1, comprising a time-slot control section which performs control of the optical communications send and receive time slots for signaling information between said subscriber service channel sections and said signaling processing sections inserted into said plurality of common slots, each of said subscriber service channel sections and said signaling processing sections inserted into said plurality of common slots being provided with an optical transmitter and an optical receiver.

6. A subscriber line transmission device comprising:
a subscriber device package consisting of at least a subscriber service channel section package which houses subscriber terminals and a signaling processing section package which performs processing of channel control information;
a plurality of common slot sections into which a plurality of different said subscriber device packages are inserted, and which has individual time slots for the transmission and reception of signaling signals of said subscriber transmission device;
a time slot interchange section, which controls the connection of signaling signals between said common slot sections by exchanging each said time slot signal;
a concentration function processing section which performs transfer control of the signaling information from said signaling processing section packages; and
a concentration section which groups and multplexes data signals from packages inserted into said common slot sections and signaling information from said concentration function processing section, and which makes connection via the multiplexed transmission path with the exchange.

7. A subscriber line transmission device according to claim 6, wherein connection control by means of said time slot interchange section is performed based on specifications from the exchange side.

8. A subscriber line transmission device according to claim 6, wherein connection control by means of said time slot interchange section is performed based on package identification information given from each package inserted into said common slot section.

9. A subscriber transmission device comprising:
a subscriber device package consisting of at least a subscriber service channel section package which houses subscriber terminals, a signaling information processing section package which processes switching control signals, and a signaling processing section package which performs processing of channel control information;
a plurality of common slot sections into which a plurality of different said subscriber device packages are inserted, and which has individual time slots for the transmission and reception of signaling signals of said subscriber transmission device;
a time slot interchange section, which controls the connection of signaling signals between said common slot sections by exchanging each said time slot signal; and
a concentration section which groups and multplexes data signals and signaling information from packages inserted into said common slot sections, and which makes connection via the multiplexed transmission path with the exchange.

10. A subscriber line transmission device according to claim 6 or 9, wherein said tine slot interchange section consists of a time division switch.

11. A subscriber line transmission device comprising:
a subscriber device package consisting of at least a subscriber service channel section package which houses subscriber terminals and a signaling processing section package which performs processing of channel control information;
a plurality of common slot sections into which a plurality of different said subscriber device packages are inserted, and which has individual time slots for the transmission and reception of signaling signals of said subscriber device package assigned on a signaling bus;
a time slot interchange section, which controls the connection of signaling signals between said common slot sections by changing the time slot assignments on said signaling bus;
a concentration function processing section which performs transfer control of the signaling information from said signaling processing section packages; and
a concentration section which groups and multplexes data signals from packages inserted into said common slot sections and signaling information from said concentration function processing section, and which makes connection via the multiplexed transmission path with the exchange.

12. A subscriber line transmission device comprising:
a subscriber device package consisting of at least a subscriber service channel section package which houses subscriber terminals and a signaling processing section package which performs processing of channel control information;
a plurality of common slot sections into which a plurality of different said subscriber device packages are inserted, and which has individual time slots for the transmission and reception of signaling signals of said subscriber device package assigned on a signaling bus;
a time slot interchange section, which controls the connection of signaling signals between said common slot sections by changing the time slot assignments on said signaling bus; and
a concentration section which groups and multplexes data signals from packages inserted into said common slot sections and signaling information from said concentration function processing section, and which makes connection via the multiplexed transmission path with the exchange.

13. A subscriber line transmission device according to claim 9, 11 or 12, Wherein the connection control by means of said time slot interchange section is performed by means of specification from the exchange side.

14. A subscriber line transmission device according to claim 9, 11 or 12, wherein connection control by means of said time slot interchange section is performed based on package identification information given from each package inserted into said common slot section.
